Europäisches Patentamt

European Patent Office

Office européen des brevets

(19)

(11) Publication number: **0 166 518**
**B1**

# EUROPEAN PATENT SPECIFICATION

(12)

(45) Date of publication of patent specification: **03.08.88**

(21) Application number: **85303374.4**

(22) Date of filing: **14.05.85**

(51) Int. Cl.⁴: **E 21 B 33/138**

(54) Method and apparatus for plugging a wellbore in high impulse fracture.

(30) Priority: **28.06.84 US 625430**
**28.06.84 US 625429**

(43) Date of publication of application:
**02.01.86 Bulletin 86/01**

(45) Publication of the grant of the patent:
**03.08.88 Bulletin 88/31**

(84) Designated Contracting States:
**DE GB NL**

(56) References cited:
**US-A-2 911 046**
**US-A-2 988 143**
**US-A-4 039 030**
**US-A-4 265 311**

(73) Proprietor: **MOBIL OIL CORPORATION**
**150 East 42nd Street**
**New York New York 10017 (US)**

(72) Inventor: **Jennings, Alfred Roy, Jr.**
**4021 Leon Drive**
**Plano Texas 75074 (US)**

(74) Representative: **Cooper, John Anthony et al**
**Mobil Court 3 Clements Inn**
**London WC2A 2EB (GB)**

Courier Press, Leamington Spa, England.

## Description

This invention is directed to a method and apparatus for facilitating the removal of debris when a canister containing a propellant is ignited in a wellbore during controlled pulse fracturing or high energy gas fracturing.

Stimulation of wells through mechanical fracturing can be accomplished according to a method known to the prior art as controlled pulse fracturing or high energy gas fracturing. This method is described in an article by Cuderman, J. F., entitled "High Energy Gas Fracturing Development", Sandia National Laboratories, SAND 83-2137, October 1983. Using this known method enables the multiple fracturing of a formation or reservoir in a radial manner which increases the possibility of contacting a natural fracture. In the practice of this method, a means for containing a propellant or a canister is suspended into a wellbore and the canister means is placed downhole next to the oil or hydrocarbonaceous fluid productive interval.

Also, as is known in the prior art, the propellant in the canister may belong to the modified nitrocellulose or the modified and unmodified nitroamine propellant class. Suitable solid propellants capable of being utilized include a double-based propellant known as M-5 which contains nitroglycerine and nitrocellulose. Another suitable propellant is a composite propellant which contains ammonium perchlorate in a rubberized binder. The composite propellant is known as HXP-100 and is purchasable from the Holex Corporation of Hollister, California. M-5 and HXP-100 propellants are disclosed in U.S. Patent No. 4,039,030 issued to Godfrey et al.

After placing the propellant means for creating multiple fractures into a canister and suspending it downhole near the oil or hydrocarbonaceous fluid productive interval, it is ignited. Ignition of the propellant means for creating the multiple fractures causes the generation of heat and gas pressure. To contain the generated propellant energy within the wellbore and formation, an aggregate stem, generally composed of cement, is placed above the canister containing the propellant thereby sealing the wellbore. The canister suspension and ignition means passes through the aggregate stem.

After ignition of the propellant means it is difficult to remove the aggregate stem, which often has to be drilled out. When removing the aggregate stem, the suspension means, generally a cable, and the ignition means, along with remnants of the canister which previously contained the propellant, frequently fall into the wellbore. This debris may interfere with production of hydrocarbonaceous fluids from the formation. Drilling out the aggregate often damages the wellbore and formation.

Therefore, it is desirable to provide an improved method and apparatus to facilitate removal of the canister, suspension, and ignition means from the wellbore; and to provide an improved method of preventing damage to the wellbore when removing the stem.

The present invention relates to a method and apparatus for sealing a wellbore with a pumpable gel mixture capable of being solidified after placing canister means containing a propellant therein into the wellbore. Upon solidifying, the gel becomes a solid plug which is able to withstand the energy released from the ignited propellant.

In the practice of the present invention, a means for containing the pumpable gel mixture is placed into the wellbore at a predetermined level, generally at the hydrocarbonaceous productive fluid interval. Afterwards, the gel mixture is pumped into the wellbore above the means for containing the pumpable mixture.

Subsequently, the gel mixture is caused to become a solid sufficient to withstand the energy released from the ignited propellant. After ignition, and when conditions in the wellbore and formation have reached the desired level of stability, the solidified gel plug is removed by either chemical or physical means.

In particular embodiments, the present invention relates to a method and apparatus for practicing the method to facilitate removal of the canister suspension and ignition means, along with any canister remnants, from the wellbore. More specifically, this invention provides a method and apparatus which facilitates the removal of the gel plug or stem after ignition of the propellant and which facilitates varying the density of the gel plug or stem to increase its strength. Further, according to the invention a method and apparatus is provided which minimizes damage to a wellbore or formation when removing the gel plug or stem, and which allows for variations in the stability and rigidity of the gel plug or stem as required.

According to the invention in its broadest aspect, a method is provided in high impulse fracturing for sealing a wellbore with a pumpable gel mixture characterized by the steps of:

(a) placing containment means into the well-bore for maintaining the pumpable gel mixture at a predetermined level in the wellbore, said containment means being integrally connected to canister means for holding an ignitable propellant means; and

(b) pumping said gel mixture into the wellbore above said containment means for the pumpable gel mixture, and causing said gel mixture to become a solid gel plug adapted to be liquefied after ignition of said propellant means.

According to a preferred embodiment of the invention a solid nonreactant composition is added to the pumpable gel mixture in an amount sufficient to increase the density of the pumpable gel, whereby within a time of up to 4 hours said gel mixture becomes a solid gel plug of sufficient density to withstand the energy released from said propellant means, when ignited, at a temperature of up to greater than 538°C (1,000°F) and a pressure of 551,682 kPa (80,000 psi), and said gel plug is adapted to be easily broken down, liquefied and removed from the wellbore with little or no damage to the wellbore and formation.

In another aspect of the invention, an apparatus is provided for sealing a wellbore after placing a propellant into said wellbore wherein a seal is formed by a solidified gel plug stem capable of withstanding energy released from ignition of said propellant and adapted to be easily removed from the wellbore after said ignition comprising:

(a) containment means for maintaining a pumpable gel mixture at a predetermined level in said wellbore;

(b) means for pumping said gel mixture into the wellbore and contacting said containment means which is integrally connected to canister means containing said propellant; and

(c) a pumpable gel mixture adapted to become a solid gel plug stem of sufficient density to withstand the energy released from said propellant after ignition, including heat and pressure.

Figure 1 is a cross-sectional schematic representation of a wellbore with solid gel plug stem and containment means with canister containing propellant before ignition; and

Figure 2 is a schematic cross-sectional representation of the solid gel plug stem and containment means with part of canister means remaining after ignition and fracture of the formation.

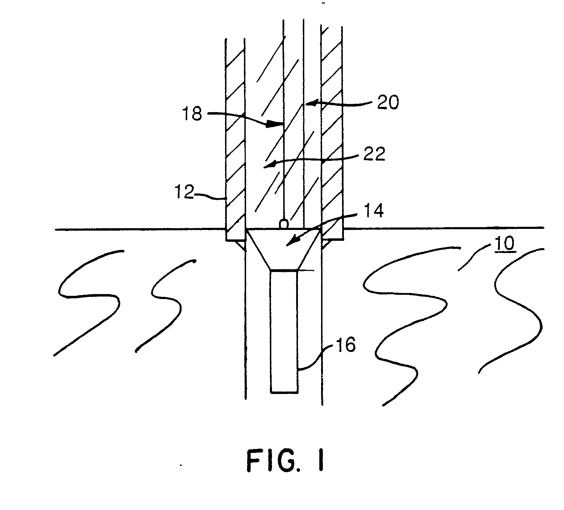

In the practice of this invention, referring to Figure 1, canister means 16 containing propellant is placed into wellbore 12 which penetrates hydrocarbonaceous fluid producing formation 10. Canister 16 is suspended into the wellbore 12 via retrieval means or cable 18 which is connected to retainer stem or containment means 14. In order to ignite the propellant contained in canister means 16, one end of ignition means 20 for igniting the propellant in canister 16 is connected to the containment means or retainer stem 14, which is integrally connected to canister means 16 and positioned on the upwardly directed end of said canister 16. The other end of the ignition means 20 is connected or affixed to a location at or above ground level above wellbore 12. The ignition means 20 preferably may be a conduit containing an electrical wire which wire can be used to generate an electrical spark within the canister 16 containing the propellant.

After positioning retainer stem 14 at the desired level in the wellbore, a pumpable gel mixture is placed into the wellbore above retainer steam 14 by pumping the gel mixture before solidification by pump means (not shown). After preferably from about 2 hours to about 4 hours, the pumpable gel mixture solidifies. As will be understood by those skilled in the art, the composition of the mixture can be varied to obtain the desired rigidity in the gel stem. One method of making a suitable pumpable mixture is disclosed in U.S. Patent No. 4,333,461 issued to Muller on June 8, 1982. Upon solidification, the pumpable gel mixture forms the gel plug stem 22. The stability and rigidity of the gel plug stem 22 depends upon the physical and chemical characteristics of the gel plug stem which are selected so that the gel plug stem is of a stability and rigidity adapted to absorb the shock from ignition of the propellant contained in the canister 16. Generally these pressures generated upon ignition will vary from about 69,049 kPa to about 551,682 kPa (10,000 psi to 80,000 psi). Instantaneous heat generated upon ignition of the propellant may be greater than about 538°C (1,000°F) in the vicinity of the deflagration but is quickly dissipated with propagation. Retainer stem 14 which is positioned just below the solidified gel plug 22 forms an integral part of the canister when it is suspended into the wellbore from a location at or above the ground level.

Often, depending upon the kind of propellant used, it will be necessary to increase the density of the pumpable gel to obtain a gel plug having the desired stability and rigidity therein. To accomplish this any solid non-reacting material may be added to the pumpable gel mixture. Preferred non-reacting solid materials include solid rock salt, or naturally occurring sodium chloride, calcium carbonate, and suitably crushed mollusc shells, such as oyster shells.

Other gel mixtures are used to obtain a gel plug having the desired stability and rigidity. A preferred gel mixture which is used to obtain the desired stability and rigidity, for example, is a mixture of water and hydropropyl guar gum cross-linked with transitional metals and ions thereof. The purpose of the transitional metal ions is to provide increased strength, stability and rigidity for the gel plug stem 22.

Hydropropyl guar gum is placed into water to form a fluid gel mixture, preferably in an amount of from 0.70 to 10.0 weight percent of said mixture. In a particularly preferred embodiment, hydropropyl guar gum is used to form said mixture in an amount of 7.2 percent by weight of said gel mixture.

Metallic ions are also used in the pumpable gel mixture and include titanium, zirconium, chromium, antimony and aluminum. The concentration of these transitional metals in the pumpable gel fluid will vary depending upon the requirements for the particular propellant being used and the nature of the wellbore and formation into which the canister containing the propellant is placed. Although the exact amounts of the metals required will vary depending on the particular application, the metals should be included within the pumpable gel fluid mixture in amounts of from about 0.005 weight percent to about 0.50 weight percent, preferably about 0.01 weight percent of said pumpable gel fluid mixture.

There are several methods of preparing the types of polymer systems which are used to obtain the stable gel plugs described in this patent application. The ranges of polymer, buffer, and crosslinker concentrations given encompass two primary methods of forming the gel plugs.

The first method involves guar gum or hydroxypropyl guar as the base polymer. These products are widely used in the petroleum and food industries and are commercially available from chemical suppliers such as Celanese, Henkel, Hercules, and Millmaster Onyx. For this method, base gel containing the described concentration of 18.1 kg per 3785.4 l (40 lbs per 1000 gallons) of water (several types of water such as 2% KCl water, city water, formation water, etc. are used) is mixed into a holding tank at the surface (500 bbl frac tank, for example). The purpose of the base gel is to suspend additional unhydrated guar or hydroxypropyl guar up to 272.4 kg per 3785.4 l (up to 600 or so lbs/1000 gals) added as the fluid system is pumped into the wellbore. The "secondary" polymer is pre-treated by the supplier with glyoxal or similar material to retard hydration. A buffer (such as sodium acetate or sodium pyrophosphate) is added with the additional polymer to maintain a fluid pH value sufficient to hydrate the additional polymer. The hydration of the additional material occurs slowly enough to allow placement of the plug (especially for the invention described in this patent application). The buffers and gelling agents are readily available from the various service companies. In recent years improvements in fluid chemistry have led to "one bag" systems which contain all the described dry additives in one container. Comparable gel plugs can be prepared using hydroxyethyl cellulose (HEC) in the described manner using the primary and secondary polymer approach. The HEC is available from Hercules and Henkel.

The second method involves the use of much lower polymer concentrations 27.2—45.4 kg per 3785.4 l (60 to 100 lbs/1000 gals of water) where viscosity and stability characteristics have been greatly enhanced by crosslinking with solutions of metallic salts. Because of the molecular structure, guar and derivatized guar (hydroxypropyl guar) lend themselves more satisfactorily to crosslinking than HEC. Therefore, the crosslinked guars are most useful in the present invention. The base gel in this instance would consist of the guar in solution at the described concentrations. Buffers are then used, depending on the crosslinker, to maintain a fluid pH necessary for the crosslink reaction. Several methods have been developed and are known in the prior art as has been suggested herein.

For the guar or hydroxypropyl guar crosslinked with borate, sodium pyrophosphate is used as the buffer, for example, and sodium tetraborate used as the crosslinking agent. The buffer concentration ranges from 4.53—9.1 kg per 3785.4 l (10 to 20 lbs/1000 gals) for example and the borate required ranges from 2.25—6.8 kg per 3785.4 l (5 to 15 lbs/1000 gals) depending on the amount of guar or hydroxypropyl guar in the base gel. These materials are available from chemical suppliers and service companies such as have been described herein.

Other crosslinkers which are used include salt solutions of transitional metals such as titanium, chromium, and zirconium. Several crosslinker systems using titanium in solution have been developed by DuPont. These include titanium chemically combined with triethanolamine (TYZOR TE) and acetylacetonate (TYZOR AA), as examples. Because of their flexibility and utility, hydroxypropyl guar crosslinked with titanium is a very common present-day fracturing fluid and is available from several service companies; these fluid systems are also known in the prior art. Although not developed to the extent of the titanium crosslinked gel systems, fluids crosslinked with zirconium and chromium are avilable through the service companies.

Titanium crosslinked gels are more shear and temperature stable than borate gel systems. The buffer system used for titanium crosslinked gel include sodium acetate, sodium bicarbonate, and organic acids. The buffer(s) are mixed into the base gel and the crosslinker is added as the fluid is pumped. Reaction of the crosslink can be controlled by fluid pH and type and concentration of crosslinker solution used.

The gel plug as described in this patent application is especially advantageous since it will not "melt" or break down because the intense heat generated by the detonation of the high energy impulse device is localized. For this reason hydrochloric acid is used to chemically break down the gel plug and a concentration of 15% by weight HCl in water is especially useful. This acid with necessary corrosion inhibitors, etc. is available from the service companies. The HCl solution is circulated down the wellbore using coiled tubing and nitrogen is often used with this operation to minimize the amount of fluid in contact with the zone of interest following the high energy impulse treatment.

When using propellants to generate the desired fracturing pressure, it is often desirable to produce a gel stem plug 22 which will withstand temperatures from about 149°C to about 232°C (300°F to 450°F) for from about 0.5 of a day to about 4 days. A thermally stable solid gel plug stem 22 is obtained by mixing into the pumpable gel mixture an oxygen scavenger chemical composition, for example sodium thiosulfate or a short chain alcohol or carbinol (such as methanol, ethanol, and isopropanol). However sodium thiosulfate is preferred. The concentration of the oxygen scavenger, of course, will depend upon the thermal stability desired to be obtained for the gel plug stem 22. Moreover, the preferred concentration of the oxygen scavenger chemical composition in the pumpable gel mixture is from about 0.10 percent by weight to about 0.75 percent by weight, most preferably 0.50 percent by weight, based on the total weight of the mixture.

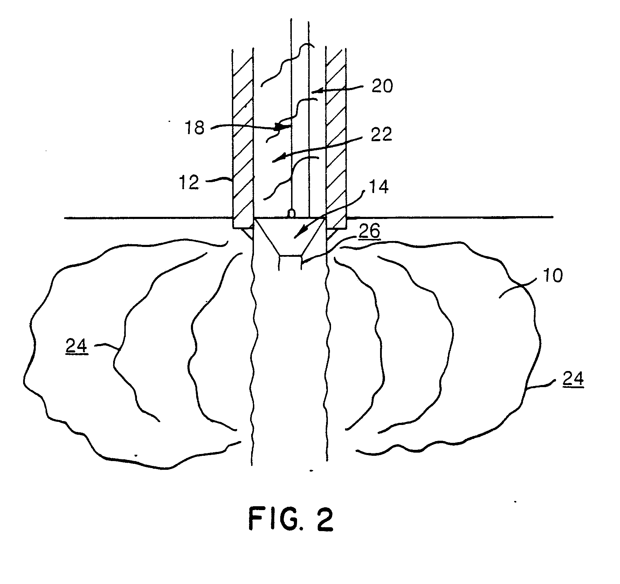

Turning to the drawings, Figure 2, upon ignition of the propellant in canister 16, heat and pressure is released within the wellbore 12 and expands into the formation 10 causing additional fracturing. As shown in Figure 2, the heat and pressure produced at a controlled rate causes a fracturing of the hydrocarbonaceous producing formation 10. Fracturing of the formation 10 is indicated by lines 24 in Figure 2. Upon ignition, the heat and pressure created by the propellant causes a total or partial disintegration of canister 16 which is adapted to contain the propellant. However, as shown in Figure 2, the means for retrieval or cable 18 and ignition means or electric wire 20 along with the retainer means 14 for stem plug 22 remain more or less intact. In order to maintain the productive level of the formation and keep any debris resultant from ignition of propellant from entering into the wellbore, the invention provides an easy method for removing the solid gel plug stem 22 which does not cause the debris to fall within the wellbore 12.

The invention provides several different ways of easy removal of the solid gel plug stem 22. One variation, which can be utilized to facilitate removal of the gel plug stem 22 from wellbore 12 is to form a solid gel stem plug 22 containing a gel breaker. This gel breaker, included in the pumpable gel mixture, is selected from a group of chemical compounds which can break down the solid gel at temperatures of less than 16°C to 121°C (60°F to 250°F). Generally this breakdown of the gel stem will occur within from 2 hours to 24 hours after solidification of the gel mixture in the well bore depending upon type and concentration of gel breaker added. Chemical compositions satisfactory for use as gel breakers, and which may be incorporated into the pumpable gel mixture, include certain enzymes and certain oxidizing agents (such as sodium persulfate) which are suitable for breaking down the solid gel. Other gel breakers are disclosed in U.S. Patent No. 4,265,311 issued to Ely on May 5, 1981. Enzyme breakers may be obtained commercially from oil field service companies.

The concentration of the gel breaker incorporated into the pumpable gel mixture may vary from about 0.01 weight percent to about 0.10 weight percent, preferably about 0.05 weight percent of the gel mixture. Although the temperature upon ignition in the wellbore may generally exceed 66°C (150°F), the gel plug stem 22 will remain intact during the generation and dissipation of energy after ignition of the propellant. Upon cooling to a temperature of from about 16°C to 66°C (60°F to about 150°F), a suitable gel breaker will break down the solid gel plug stem in the wellbore causing the stem to liquify and this will facilitate removal of adhering debris, retainer stem 14, along with retrieval cable 18, and the ignition means or wire 20.

Another method for breaking the gel according to the invention comprises contacting the solidified gel stem with a mineral acid after ignition of the propellant and lapse of a suitable time interval. In those instances where it is undesirable to have a gel breaker incorporated into the gel mixture prior to ignition to remove the solid gel plug stem 22, it is preferred to use hydrochloric acid of a strength sufficient to solubilzie the solid gel stem 22 without attacking retrieval cable 18, ignition wire 20, or retainer means 14 for stem plug 22. Hydrochloric acid, and acids similar thereto, can be used to break down the solid gel on contact. Hydrochloric acid of a concentration of about 10 percent to about 28 percent preferably about 15 percent, by volume of solution, will generally be sufficient for this purpose. Although hydrochloric acid has been mentioned, other similar mineral acids or strong organic acids may be used.

The following examples illustrate the invention.

Example 1

According to the invention, a slurry is formed with 3785.4 liters (1,000 gallons) of water. This slurry comprises 18.4 kg (40 pounds) of base gel, hydroxypropyl guar gum, which forms a hydrate in the water. To this mixture is added 272.1 kg (600 pounds) of chemically treated hydroxypropyl guar gum which has delayed hydration or thickening qualities. Then, 9.2 kg (20 pounds) of sodium pyrophosphate buffer which is suitable to obtain the desired pH and reaction time is added to this mixture. A cross-linking agent consisting of sodium tetra-borate is then added in an amount of 9.2 kg (20 pounds). Nineteen and forty-seven one hundredths kilograms (42 pounds) of sodium thiosulfate, an oxygen scavenger, is then added to the mixture. This gel mixture is pumped into the formation above the retainer stem 14. After solidification of the mixture and ignition of the propellant, the cooled solid gel stem plug is liquefied after contacting the solid gel stem with aqueous hydrochloric acid in a concentration of 15 volume percent until the solid gel stem becomes solubilized and therafter the solubilized gel is removed from the wellbore.

Example 2

A slurry or mixture is made as above in Example 1 with 3785.41 liters (1,000 gallons) of water, and 18.4 kg (40 pounds) of base gel including hydroxypropyl guar gum which forms a hydrate in water and 272.1 kg (600 pounds) of chemically treated hydroxypropyl guar gum which has delayed hydration or thickening qualities. Additional components are placed into the gel mixture: namely, 190.47 kg (420 pounds) of crushed oyster shells are next added to the mixture. Next, a titanium solution with triethanol amine (DuPont's TYZOR TE), in an amount of about 1.81 kg (4 pounds), is added to the mixture; finally, about 77.1 kg (170 pounds) of potassium chloride is subsequently added to the mixture. One and eighty-one hundredths (4 pounds) of sodium persulfate is then added to the mixture and serves as a gel breaker. Upon solidification, the formed gel stem is capable of withstanding greater pressures upon ignition of the propellant. Upon cooling, after ignition of the propellant, the gel stem is liquefied by the sodium persulfate gel breaker and is removed from the wellbore.

**Claims**

1. Method for plugging a wellbore in high impulse fracturing which comprises sealing the wellbore with a pumpable gel mixture characterized by the steps of:

(a) placing containment means for maintaining the pumpable gel mixture at a predetermined level in the wellbore, said containment means being integrally connected to canister means for holding an ignitable propellant means;

(b) pumping said gel mixture into the wellbore above said containment means for the pumpable gel mixture, and causing said gel mixture to become a solid gel plug adapted to be liquefied after ignition of said propellant means.

2. The method according to claim 1 which comprises adding a solid non-reactant composition to the pumpable gel mixture in an amount sufficient to increase the density of the pumpable gel, whereby within a time of up to 4 hours said gel mixture becomes a solid gel plug of sufficient density to withstand the energy released from said propellant means when ignited, at a temperature of up to greater than 538°C (1000°F) and pressure of 551,682 kPa (80,000 psi).

3. The method according to Claims 1 or 2 wherein said solid non-reactant composition is selected from the group consisting of sodium chloride and calcium carbonate.

4. The method according to any one of Claims 1, 2 or 3 wherein a gel breaker is added to the pumpable gel mixture in an amount sufficient to break down the solid gel stem formed in the wellbore at a temperature of up to 121°C (250°F) within a time of up to 24 hours.

5. The method according to any one of Claims 1, 2, 3 or 4 wherein an oxygen scavenger is placed into said gel mixture, said oxygen scavenger being selected from the group consisting of sodium thiosulfate and a short chain alcohol.

6. The method according to Claim 5 wherein the oxygen scavenger is included in said gel mixture in a concentration of from 0.10 percent by weight to 0.75 percent by weight of said mixture.

7. The method according to any one of Claims 1, 2, 3 or 4 wherein said pumpable gel mixture includes a gel breaker capable of breaking down said solid gel plug where said gel breaker comprises an enzyme and/or an oxidizing agent.

8. The method according to any one of Claims 1, 2, 3, 5 or 6 wherein hydrochloric acid in a concentration of from 10 percent to 28 percent by volume of solution is made to contact the solid gel plug to break down said solid gel and facilitate its removal from the wellbore.

9. The method according to any one of claims 1 through 8 wherein said gel mixture comprises hydropropyl guar gum cross-linked with a transitional metal ion which is selected from the group consisting of titanium, zirconium, chromium, antimony and aluminum ions.

10. The method according to Claim 9 wherein said transitional metal ion is included within said pumpable gel mixture in an amount of from 0.005 weight percent to about 0.50 weight percent of said gel mixture.

11. Apparatus for sealing a wellbore after placing a propellant into said wellbore wherein a seal is formed by a solidified gel plug stem capable of withstanding energy released from ignition of said propellant and adapted to be easily removed from the wellbore after said ignition characterized by:

(a) containment means for maintaining a pumpable gel mixture at a predetermined level in said wellbore;

(b) means for pumping said gel mixture into the wellbore and contacting said containment means which is integrally connected to canister means containing said propellant; and

(c) a pumpable gel mixture adapted to become a solid gel plug of sufficient density to withstand the heat and pressure released from the said propellant, after ignition, and thereafter being capable of liquefaction so as to be easily removed from the wellbore.

12. The apparatus according to Claim 11 wherein said containment means for maintaining the pumpable gel mixture at a predetermined level in the wellbore includes means for suspending said containment means in the wellbore from a position at or above the ground level.

13. The apparatus according to any one of Claims 11 or 12 wherein means for igniting the propellant is connected to said containment means and said canister means.

14. The apparatus according to any one of Claims 11, 12 or 13 wherein said gel mixture is capable of being solidified after a time up to 4 hours, and thereafter of being able to withstand pressures generated upon ignition up to 551,682 kPa (80,000 psi), and temperatures greater than 538°C (1000°F).

**Patentansprüche**

1. Verfahren zum Verschließen eines Bohrlochs bei der Frac-Behandlung mit starken Impulsen, bei dem das Bohrloch mit einer pumpfähigen Gelmischung verschlossen wird, gekennzeichnet durch die folgenden Verfahrensschritte:

a. Einbringen einer Verschlußvorrichtung zum Halten der pumpfähigen Gelmischung auf einem festgelegten Niveau in dem Bohrloch, wobei die Verschlußvorrichtung mit einem Kanister zum Halten eines zündfähigen Treibmittels einstückig verbunden ist;

b. Pumpen der Gelmischung in das Bohrloch oberhalb der Verschlußvorrichtung für die pumpfähige Gelmischung und Überführen der Gelmischung in einen festen Gelstopfen, der so eingestellt ist, daß er nach dem Zünden des Treibmittels verflüssigt wird.

2. Verfahren nach Anspruch 1, bei dem eine feste, nichtreaktive Zusammensetzung der pumpfähigen Gelmischung in einer Menge zugegeben wrid, die ausreicht, um die Dichte des pumpfähigen Gels zu erhöhen, wobei innerhalb eines Zeitraums von bis zu 4 h die Gelmischung ein fester Gelstopfen von ausreichender Dichte wird, um der Energie zu widerstehen, die von dem Treibmittel freigesetzt wird, wenn dieses gezündet wird, bei einer Temperatur von mehr als 538°C (1000°F) und einem Druck von 551682 kPa (80000 psi).

3. Verfahren nach Anspruch 1 oder 2, worin die feste, nicthreaktive Zusammensetzung aus der Gruppe, bestehend aus Natriumchlorid und Calciumcarbonat, ausgewählt wird.

4. Verfahren nach einem der Ansprüche 1, 2 oder 3, worin ein Gelbrecher der pumpfähigen Gelmischung in einer Menge zugegeben wird, die ausreicht, um den in dem Bohrloch gebildeten festen Gelstopfen bei einer Temperatur von bis zu 121°C (250°F) innerhalb eines Zeitraums von bis zu 24 h aufzubrechen.

5. Verfahren nach einem der Ansprüche 1, 2, 3 oder 4, worin ein Mittel zum Beseitigen von Sauerstoff in dei Gelmischung eingebracht wird, wobei dieses Mittel aus der Gruppe, bestehend aus Natriumthiosulfat und einem kurzkettigen Alkohol, ausgewählt ist.

6. Verfahren nach Anspruch 5, worin das Mittel zum Beseitigen von Sauerstoff in der Gelmischung in einer Konzentration von 0,10 bis 0,75 Gew.-%, bezogen auf die Mischung, eingesetzt wird.

7. Verfahren nach einem der Ansprüche 1, 2, 3 oder 4, worin die pumpfähige Gelmischung einen Gelbrecher enthält, der in der Lage ist, den festen Gelstopfen zu brechen, wobei der Gelbrecher ein Enzym und/oder ein Oxidationsmittel enthält.

8. Verfahren nach einem der Ansprüche 1, 2, 3, 5 oder 6, worin Salzsäure in einer Konzentration von 10 bis 28 Volumenprozent der Lösung mit dem festen Gelstopfen in Kontakt gebracht wird, um das feste Gel zu brechen und seine Beseitigung aus dem Bohrloch zu ermöglichen.

9. Verfahren nach einem der Ansprüche 1 bis 8, worin die Gelmischung ein Hydroxypropylguarmehl enthält, das mit einem Übergangsmetallion, welches aus der Gruppe, bestehend aus Titan-, Zirkonium-, Chrom-, Antimon- und Aluminiumionen, ausgewählt ist, vernetzt ist.

10. Verfahren nach Anspruch 9, worin die pumpfähige Gelmischung das Übergangsmetallion in einer Menge von 0,005 bis etwa 0,50 Gew.-%, bezogen auf die Gelmischung, enthält.

11. Vorrichtung zum Abdichten eines Bohrloches nach dem Einbringen eines Treibmittels in das Bohrloch, worin durch einen verfestigten Gelstopfen ein Verschluß gebildet wird, und der Gelstopfen in der Lage ist, der Energie zu widerstehen, die durch die Zündung des Treibmittels freigesetzt wird, und so eingestellt ist, daß er nach der genannten Zündung aus dem Bohrloch leicht entfernt werden kann, gekennzeichnet durch

a. eine Verschlußvorrichtung zum Halten einer pumpfähigen Gelmischung auf einem festgelegten Niveau in dem Bohrloch;

b. eine Vorrichtung zum Pumpen der Gelmischung in das Bohrloch und Inkontaktbringen mit der Verschlußvorrichtung, welche einstückig mit einem Kanister verbunden ist, der das Treibmittel enthält; und

c. eine pumpfähige Gelmischung, die so eingestellt ist, daß sie ein fester Gelstopfen von ausreichender Dichte wird, um der Hitze und dem Druck zu widerstehen, welche nach Zündung durch das Treibmittel freigesetzt werden, und danach in der Lage ist, flüssig zu werden, um aus dem Bohrloch leicht entfernt zu werden.

12. Vorrichtung nach Anspruch 11, worin die Verschlußvorrichtung zum Halten der pumpfähigen Gelmischung auf einem festgelegten Niveau in dem Bohrloch eine Vorrichtung zum Aufhängen der Verschlußvorrichtung in dem Bohrloch von einer Stelle am oder über dem Niveau des Erdbodens aus aufweist.

13. Vorrichtung nach einem der Ansprüche 11 oder 12, worin eine Vorrichtung zum Zünden des Treibmittels mit der Verschlußvorrichtung und dem Kanister verbunden ist.

14. Vorrichtung nach einem der Ansprüche 11, 12 oder 13, worin die Gelmischung in der Lage ist, nach einem Zeitraum von bis zu 4 h verfestigt zu werden, und danach in der Lage ist, den beim Zünden erzeugten Drücken von bis zu 551682 kPa (80000 psi) und Temperaturen von mehr als 538°C (1000°F) zu widerstehen.

**Revendications**

1. Méthode pour colmater un puits de forage dans une fracturation à impulsion élevée qui comprend l'obturation du puits de forage à l'aide d'un mélange de gel pompable, caractérisée par les étapes suivantes:

(a) placement d'un dispositif de retenue pour maintenir le mélange de gel pompable à un niveau prédéterminé dans le puits de forage, ledit dispositif de retenue étant connecté intégralement à une cartouche pour maintenir un propulseur inflammable;

(b) pompage dudit mélange de gel dans le puits de forage, au-dessus du dispositif de retenue de ce mélange de gel pompable, et transformation dudit mélange de gel en un bouchon de gel solide susceptible d'être liquéfié après allumage de propulseur.

2. Méthode selon la revendication 1 qui comporte l'addition d'une composition non réactive, solide au mélange de gel pompable en quantité suffisante pour augmenter la densité du gel pompable, de sorte que, au bout d'un temps atteignant 4 heures, ce mélange de gel devient un bouchon de gel solide de densité suffisante pour résister à l'énergie libérée par ledit propulseur après allumage, à une température pouvant atteindre ou dépasser 538°C et à une pression de 551,682 kPa.

3. La méthode selon la revendication 1 ou 2, selon laquelle cette composition non réactive solide est choisie dans le groupe comprenant le chlorure de sodium et le carbonate de calcium.

4. La méthode selon la revendication 1, 2 ou 3, selon laquelle un agent brise-gel est ajouté au mélange de gel pompable en quantité suffisante pour rompre le bouchon de gel solide dans le puits de forage à une température pouvant atteindre 121°C au bout d'un temps pouvant atteindre 24 heures.

5. La méthode selon l'une quelconque des revendications 1, 2, 3 et 4, selon laquelle un agent désoxygénant est placé dans ledit mélange de gel, cet agent désoxygénant étant choisi dans le groupe comprenant le thiosulfate de sodium et un alcool à chaîne courte.

6. La méthode selon la revendication 5, selon laquelle l'agent désoxygénant est inclus dans le mélange de gel à une concentration de 0,10% au poids à 0,75% en poids dudit mélange.

7. La méthode selon l'une quelconque des revendications 1, 2, 3 et 4, selon laquelle ledit mélange de gel pompable inclut un agent brise-gel capable de rompre ledit bouchon de gel solide, ledit agent brise-gel comprenant une enzyme et/ou un agent oxydant.

8. La méthode selon l'une quelconque des revendications 1, 2, 3, 5 et 6, selon laquelle de l'acide chlorhydrique à une concentration de 10% à 28% en volume de solution est mis en contact avec le bouchon de gel solide pour rompre ledit gel solide et faciliter son élimination du puits de forage.

9. La méthode selon l'une quelconque des revendications 1 à 8, selon laquelle ledit mélange de gel comprend de la gomme guar hydropropy-lée, réticulée par un ion de métal de transition qui est choisi dans le groupe comprenant les ions suivants: titane, zirconium, chrome, antimoine et aluminium.

10. La méthode selon la revendication 9, selon laquelle ledit ion de métal de transition est inclus dans ledit mélange de sel pompable en quantité de 0,005% en poids à environ 0,50% en poids dudit mélange de gel.

11. Appareil pour obturer un puits de forage après placement d'un propulseur dans ledit puits de forage, selon lequel un obturateur est formé par un bouchon de gel solidifié capable de résister à l'énergie libérée par l'allumage dudit propulseur et facile à éliminer du puits de forage après cet allumage, caractérisé en ce qu'il comporte:

(a) un dispositif de retenue pour maintenir un mélange de gel pompage à un niveau prédéterminé dans ledit puits de forage;

(b) un dispositif pour pomper ledit mélange de gel dans le puits de forage et au contact de ce dispositif de retenue qui est connecté intégralement à la cartouche contenant ledit propulseur; et

(c) un mélange de gel pompable, susceptible de devenir un bouchon de gel solide de densité suffisante pour résiter à la chaleur et à la pression libérées par ledit propulseur, après allumage, et susceptible ensuite de se liquéfier afin d'être éliminé facilement du puits de forage.

12. L'appareil selon la revendication 11, selon lequel ledit dispositif de retenue pour maintenir le mélange de gel pompable à un niveau prédéterminé dans le puits de forage inclut un dispositif pour suspendre ce dispositif de retenue dans le puits de forage dans une position au niveau ou au-dessus du niveau du sol.

13. L'appareil selon la revendication 11 ou 12, selon lequel le dispositif d'allumage du propulseur est connecté audit dispositif de retenue et à ladite cartouche.

14. L'appareil selon la revendication 11, 12 ou 13, selon lequel ledit mélange de gel est susceptible de se solidifier après un temps pouvant atteindre 4 heures et ensuite de résister aux pressions générées après allumage, pouvant atteindre 551,682 kPa et aux températures supérieures à 538°C.

FIG. I

FIG. 2